# EUROPÄISCHE PATENTANMELDUNG

(11) **EP 4 794 259 A1**
(43) Veröffentlichungstag der Anmeldung: **19.08.2026**
(21) Anmeldenummer: 26158388.4
(22) Anmeldetag: 13.02.2026
(51) Int. Cl.: H04L 9/08, G06F 21/60, H04L 9/40, G06F 21/34, G06F 21/86

(54) **VERFAHREN UND ANORDNUNG ZUR SICHEREN SCHLÜSSELVERWALTUNG**

(30) Priorität: 13.02.2025 DE 102025105358
(71) Anmelder: Flying Circus Internet Operations GmbH, 06108 Halle (Saale) (DE)
(72) Erfinder: Theune, Christian, 06110 Halle (Saale) (DE)
(74) Vertreter: Lippert Stachow Patentanwälte Rechtsanwälte Partnerschaft mbB

(57) **Zusammenfassung**

Der Erfindung, die ein Verfahren und Anordnung zur sicheren Schlüsselverwaltung betrifft, liegt die Aufgabe zugrunde, eine Schlüsselverwaltung so zu gestalten, dass Schlüssel von Servern automatisiert verwendet werden können, ohne dass diese eine servereigene oder netzwerkseitige Speicherung erfahren.

Dies wird anordnungsseitig dadurch gelöst, dass die Anordnung mit einer virtuellen Karte versehen ist, welche aus einem Mikrocontroller besteht, der einen sicheren Speicherbereich aufweist, in dem kryptografisches Schlüssel-Material aufbewahrt wird und an dem ein Server physisch über einen Anschluss angeschlossen ist.

Die verfahrensseitige Lösung der Aufgabe besteht darin, dass auf einer virtuellen Karte ein geheimer Schlüssel gespeichert wird, wobei auf den Schlüssel durch den Server bedarfsweise von der virtuellen Karte mittels eines standardisierten Protokolls zugegriffen wird um die verschlüsselten Datenträger des Servers zu entschlüssen, wobei ein Prozess zur Konstruktion oder Rekonstruktion des Festplattenschlüssels angestoßen wird, d.h. ein mehrstufiges kryptografisches Verfahren, bei dem aus mehreren Schlüsselteilen ein neuer Schlüssel konstruiert oder rekonstruiert wird.

## Beschreibung

Die Erfindung betrifft ein Verfahren und Anordnung zur sicheren Schlüsselverwaltung.

Es ist bekannt, den Zugang zu Servern mittels Passworts zu schützen. Zu weiteren Erhöhung der Sicherheit ist es weiterhin bekannt, die Daten auf Servern zu verschlüsseln. Dies geschieht ebenfalls mit einem Passwort. Darunter sollen auch ein oder mehrere Keys, die typischerweise über sogenannte Key Derivation Functions generiert und mit Passphrases gesichert werden, verstanden werden.

Um einen Server neu zu starten, bedarf es der Eingabe des Passworts oder zur Datenfreigabe der Eingabe des Key. Hierbei ist die sicherste Form der Eingabe die Eingabe direkt physisch am Server.

**In** Serverfarmen, in denen zahlreiche Server in einer großen Einheit, die in sich zumeist heterogen und nicht homogen ist, zusammengefasst sind, führt die direkte physische Eingabe zu einem großen Aufwand an Arbeitszeit und zu einem Verlust an Verfügbarkeit der Performance.

Hier würde sich eine automatisierte Passworteingabe anbieten. Dies erzeugt sogleich ein Sicherheitsproblem, denn jede Speicherung eines Passworts, etwa auf dem Server selbst, kann ausgelesen werden, sobald der Server eine äußere Verbindung erhält.

Netzwerk-basierten Ansätze, wie beispielsweise die Software Clevis (https://github.com/latchset/clevis) stellt ein Pull-basiertes Modell mit mangelhaften Sicherheitsparametern dar.

Die manuelle Eingabe von Passwörtern über Tastatur oder serielle Konsole ist nicht oder nur sehr schwierig automatisierbar, insbesondere dann, wenn Server nachts oder in einer großen Anzahl neu gestartet werden müssen.

Bekannte Zwei-Faktor-Authentifizierungen (2FA) und Security-Tokens erfordern eine physische Anwesenheit, um den Freigabeprozess zu initiieren oder sind anfällig mit dem Server ausgebaut und verschickt zu werden.

Der Erfindung liegt somit die Aufgabe zugrunde, eine Schlüsselverwaltung so zu gestalten, dass Schlüssel von Servern automatisiert, verwendet werden können, ohne dass diese eine servereigene oder netzwerkseitige Speicherung erfahren.

Diese Aufgabe wird durch eine Anordnung zur sicheren Schlüsselverwaltung gelöst, die mit einer virtuellen Karte versehen ist, welche aus einem Mikrocontroller der einen sicheren Speicherbereich aufweist, in dem kryptografisches Schlüssel-Material aufbewahrt wird und an dem ein Server physisch über einen Anschluss angeschlossen ist, besteht.

**In** einer Ausgestaltung ist vorgesehen, dass der Anschluss als USB-Anschluss (USB-A, USB-C) ausgebildet ist, über den der Server an die Anordnung angeschlossen ist.

Die Nutzung von USB liefert die Sicherheit, dass es sich um eine physische, lokale Verbindung handelt. Sie sichert dagegen ab, dass der Server an den kryptografischen Key gelangen kann wenn er sich nicht im Rack oder in der Nähe des Schlüssels befindet.

Bei mehreren angeschlossenen Servern ist für jeden Server eine virtuelle Karte vorgesehen, die mit jedem Server über einen dedizierten physischen Anschluss verbunden ist.

Die Anordnung selbst kann einen Server beinhalten, der mit allen virtuellen Karten verbunden ist und Verwaltungsaufgaben (Löschen oder Sperren von Schlüsseln, Statusabfragen, Aktivierung/Parametrisierung weiterer Funktionen, s.u.) übernimmt, ohne die Schlüssel selbst extrahieren zu können.

**In** einer Ausführung der Erfindung ist vorgesehen, dass mehrere virtuelle Karten in einem Rack angeordnet sind, dass jede virtuelle Karte einen physischen äußeren Anschluss aufweist und sie darüber mittels einer Kabelverbindung mit jeweils ihrem Server verbunden ist. Diese physische Trennung im Rack als eigene Anordnung sichert davor, dass das Material aus Versehen bei Ausbau des Servers mitgenommen werden kann.

Die Aufgabe wird auch durch ein Verfahren zur sicheren Schlüsselverwaltung gelöst, bei dem auf einer virtuellen Karte ein geheimer Schlüssel gespeichert wird, wobei auf den Schlüssel durch den Server bedarfsweise von der virtuellen Karte mittels eines standardisierten Protokolls zugegriffen wird um die verschlüsselten Datenträger des Servers zu entschlüssen, wobei ein Prozess zur Konstruktion oder Rekonstruktion des Festplattenschlüssels angestoßen wird, d.h. ein mehrstufiges kryptografisches Verfahren, bei dem aus mehreren Schlüsselteilen ein neuer Schlüssel konstruiert oder rekonstruiert wird.

Vorzugsweise ist das Verfahren so gestaltet, dass der Schlüssel über das standardisierte CCID-Protokoll übermittelt wird. Die Nutzung eines so gestalteten Verfahrens bzw. des CCID-Protokolls sichert davor, dass z.B. ein Mitarbeiter des Rechenzentrums, in dem sich der oder die Server befinden, das Schlüsselmaterial vom Mikrocontroller kopieren kann.

Der geheime Schlüssel verlässt nie die virtuelle Karte, sondern wird nur nur für die im (CCID)-Protokoll definierten Operationen genutzt oder verwendet.

**In** bevorzugter Weise ist vorgesehen, dass der Schlüssel vom Server beim Entsperren verschlüsselter Festplatten verwendet wird.

Der Schlüssel kann einen zentralen Schlüssel für den Server umfassen.

Es ist auch möglich, dass zusätzlich oder alternativ der Schlüssel separate Schlüssel pro Festplatte oder logischer Partition umfasst.

Die Erfindung wird nachfolgend anhand eines Ausführungsbeispiels unter Bezugnahme der schematischen Darstellung erläutert.

Die zugehörige Figur zeigt ein Blockdiagramm einer erfindungsgemäßen Anordnung.

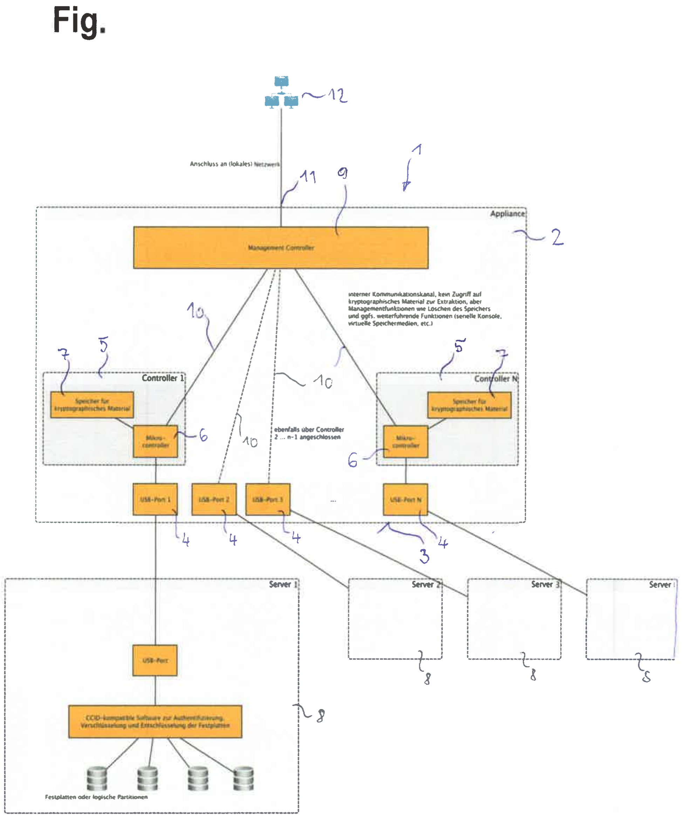

In der Figur ist schematisch ein Gerät 1 dargestellt, das physisch als 19"-Zoll Gerät ausgeführt werden kann. Durch diese Gestaltung kann das Gerät in einem nicht näher dargestellten handelsüblichen 19"-Schrank für Server und Telekommunikation verbaut werden. Im Schema umfasst das Gerät 1 den Bereich "Appliance" 2.

An der Bedienseite 3 der Appliance 2 werden ein oder mehrere USB-Ports 4 bereitgestellt. Typischerweise werden dies 12, 16 oder 24er Ports sein. Diese können als USB-A, USB-C, oder anderen USB-Ports ausgeführt werden. Es ist aber auch möglich, diese als Module zu gestalten, um diese flexibel tauschen zu können.

Zur sicheren Schlüsselverwaltung ist jeder USB-Port 4 mit einer virtuellen Karte 5 versehen, welche aus einem Mikrocontroller als Port-Controller 6, und einem sicheren mit dem Port-Controller 6 verbundenen Speicher 7 besteht, in dem kryptografisches Schlüssel-Material aufbewahrt wird, und an der ein Server 8 physisch über den USB-Port 4 angeschlossen ist.

Jedem USB-Port 4 wird somit ein unabhängiger, selbständiger programmierbarer elektronischer Port Controller 6 mit geeigneten IO-Anschlüssen zugeordnet. Mit jedem Port Controller 6 ist außerdem der eigene sichere Speicher 7 für kryptografisches Schlüsselmaterial verbunden. Dieser Speicher 7 kann , beispielsweise durch den Einsatz von intern fest oder modular verbauten Smart Cards realisiert werden.

Gleichzeitig stellt der physische Aufbau des Gerätes 1 durch den Einsatz geeigneter Materialien und Konstruktion sicher, dass keine ungewollter und unbemerkter mechanischer Zugriff auf die internen Strukturen der Appliance 2 stattfinden kann. Hierfür sind entsprechende nicht näher dargestellte Sensoren zur Einbruchs- und Manipulationserkennung vorgesehen.

Zur zentralen Steuerung der Appliance 2 wird ein weiterer Management Controller 7 in der Appliance 2 angeordnet. Dieser wird mit jedem Port Controller 5 über einen Kommunikationsbus, nämlich einem Management-Bus 8, beispielsweise einem I2C-Bus, verbunden und ist insbesondere über einen RJ45-Ethernet-Port 9 mit einem geeigneten Netzwerk 12 verbunden. Auch wenn dies in dem Schema der Figur anders dargestellt ist, liegt der RJ45-Ethernet-Port vorzugsweise ebenfalls auf der Bedienseite 3.

Die notwendige Software wird mit den folgenden Eigenschaften ausgeführt, um den Kern der zentralen und sicheren Schlüsselverwaltung zu implementieren:
Der Port Controller 6 wird so programmiert, dass
   1. auf dem USB-Port 4 das CCID-Protokoll bereitgestellt wird, so dass von Geräten von Drittanbietern auf Basis des CCID-Standards verschlüsselte Datenträger entschlüsselt werden können;
   2. der kryptografische Speicher 7 zur Bereitstellung des Schlüsselmaterials für das CCID-Protokoll verwendet wird und
   3. Steuerfunktionen (z.B. Löschen oder Sperren von Schlüsseln, Abfrage von Statusinformationen, Aktualisierung der Software) nur über den Management-Bus ausgeführt werden.
Der Management Controller 9 wird so programmiert, dass
   1. eine oder mehrere Netzwerk-Schnittstellen (beispielsweise SSH, API, und/oder eine grafische Web-UI) bereitgestellt werden;
   2. Statusinformationen abgefragt und Management-Aufgaben der einzelnen Port Controller 6 benutzt werden können
   3. Sensor-Informationen der Appliance 2 als Ganzes (beispielsweise von Einbruchs- oder Manipulationssensoren) ausgewertet werden können
   4. Von allen Zugriffen und Aktionen entsprechende Protokolle aufgezeichnet und bereitgestellt werden.

Darüber hinaus ermöglicht die Erfindung grundsätzlich einen flexiblen, sicheren und zentralisierten Zugang und Verwaltung weiterer Funktionen des USB-Standards um Geräte von Drittanbietern zu verwalten. Die Software der Port Controller und des Management Controllers lassen sich als gemeinsame Lösung so ausgestalten, dass beliebige Peripheriegeräte über die Appliance 2 dynamisch bereitgestellt werden können, beispielsweise:
1. Ein-/Ausgabegeräte wie (virtuelle) Tastaturen, Mäuse/Touchpads/Zeigergeräte, VGA-Displays und serielle Konsolen
2. Massenspeicher wie Festplatten, CD-ROM-Laufwerke, USB-Sticks o.ä.
3. Netzwerk-Geräte, um Out-Of-Band-Management, beispielsweise als gekapselte Point-To-Point- Verbindungen um die Sicherheit klassischer Out-Of-Band-Management-Netzwerke zu erhöhen.

Zur dynamischen Bereitstellung dieser Funktionen gehört die zeitweise Aktivierung/Deaktivierung der Funktionen, sowie veränderbare Parametrisierung.

Insgesamt ist die zweistufige Architektur und Trennung der Software zwischen den Port-Controllern 6 und dem Management-Controller 9 entscheidend: Port-Controller 6 realisieren mit minimalem Software-Umfang und Kapselung die höchstmögliche Sicherheit ("Trusted Computing Base") für die kryptografischen Grundfunktionen, während der Management-Controller 9 das zentrale Management und die flexible Bereitstellung weiterer Funktionen ermöglicht.

Der Management Controller 9 muss eine entsprechende Leistungsfähigkeit aufweisen und kann beispielsweise mit typischen Serverkomponenten (x86/ARM-Prozessoren, ausreichend RAM, interner Speicher und Schnittstellen) aus Standard- oder Industrie/Embedded-Komponenten realisiert werden.

Die Erfindung gewährleistet sichere Infrastruktur-Architekturen, bei denen kryptographische Schlüssel und Funktionen kontrolliert, isoliert und auditierbar verarbeitet werden.

### Ermöglicht wird dies durch

o Hardware-gestützte Schlüsselverwaltung
o strikte Trennung von Administrationszugriff und Schlüsselmaterial
o automatisierte, reproduzierbare Sicherheitskonfigurationen
o Einsatz etablierter Kryptostandards (z. B. TLS, Festplattenverschlüsselung, Secrets-Management)

### Bezugszeichenliste

- 1: Gerät
- 2: Appliance
- 3: Bedienseite
- 4: USB-Port
- 5: virtuelle Karte
- 6: Port Controller
- 7: Speicher
- 8: Server
- 9: Managment Controller
- 10: Managment-Bus
- 11: RJ45-Ethernet-Port
- 12: Netzwerk

## Patentansprüche

1. Anordnung zur sicheren Schlüsselverwaltung mit einer virtuellen Karte (5), bestehend aus einem Mikrocontroller (6) der einen sicheren Speicherbereich (7) aufweist, in dem kryptografisches Schlüssel-Material aufbewahrt wird und an dem ein Server (8) physisch über einen Anschluss (4) angeschlossen ist.

2. Anordnung nach Anspruch 1, **dadurch gekennzeichnet, dass** der Anschluss als USB-Anschluss (USB-A, USB-C) (4) ausgebildet ist, über den der Server (8) an die Anordnung angeschlossen ist.

3. Anordnung nach Anspruch 1 oder 2, **dadurch gekennzeichnet, dass** bei mehreren angeschlossenen Servern (8) für jeden Server (8) eine virtuelle Karte (5) vorgesehen ist, die mit jedem Server (8) über einen dedizierten physischen Anschluss (4) verbunden ist.

4. Die Anordnung nach Anspruch 3, **dadurch gekennzeichnet, dass** die Anordnung selbst einen Server beinhalten kann, der mit allen virtuellen Karten (5) zur Übernahme von Verwaltungsaufgaben (Löschen oder Sperren von Schlüsseln, Statusabfragen, Aktivierung/Parametrisierung weiterer Funktionen, s.u.), ohne die Schlüssel selbst extrahieren zu können, verbunden ist.

5. Anordnung nach Anspruch 4, **dadurch gekennzeichnet, dass** mehrere virtuelle Karten (5) in einem Rack angeordnet sind, dass jede virtuelle Karte (5) einen physischen äußeren Anschluss (4) aufweist und sie darüber mittels einer Kabelverbindung mit jeweils ihrem Server (8) verbunden ist.

6. Verfahren zur sicheren Schlüsselverwaltung mit einer Anordnung nach einem der Ansprüche 1 bis 5, bei dem auf einer virtuellen Karte (4) ein geheimer Schlüssel gespeichert wird, wobei auf den Schlüssel durch den Server (8) bedarfsweise von der virtuellen Karte (4) mittels eines standardisierten Protokolls zugegriffen wird, wobei ein Prozess zur Konstruktion oder Rekonstruktion des Schlüssels angestoßen wird, das bedeutet ein mehrstufiges kryptografisches Verfahren, bei dem aus mehreren Schlüsselteilen ein neuer Schlüssel konstruiert oder rekonstruiert wird.

7. Verfahren nach Anspruch 6, **dadurch gekennzeichnet, dass** der Schlüssel über das standardisierte CCID-Protokoll übermittelt wird.

8. Verfahren nach einem der Ansprüche 6 oder 7, **dadurch gekennzeichnet, dass** der Schlüssel vom Server (8) beim Entsperren verschlüsselter Festplatten verwendet wird.

9. Verfahren nach einem der Ansprüche 5 bis 7, **dadurch gekennzeichnet, dass** der Schlüssel einen zentralen Schlüssel für den Server (8) umfasst.

10. Verfahren nach einem der Ansprüche 5 bis 8, **dadurch gekennzeichnet, dass** der Schlüssel separate Schlüsseln pro Festplatte oder logischer Partition umfasst.
